# EUROPEAN PATENT SPECIFICATION

(11) **EP 0 785 953 B1**
(45) Date of publication and mention of the grant of the patent: **14.04.1999**
(21) Application number: 95936475.3
(22) Date of filing: 09.10.1995
(51) Int. Cl.: C08C 19/40, C08C 19/06, C08G 59/34, C08L 63/08

(54) **MONOHYDROXYLATED DIENE POLYMERS AND EPOXIDIZED DERIVATIVES THEREOF**
MONOHYDROXYLIERTE DIENE POLYMERE UND IHRE EPOXIDIERTEN DERIVATE
POLYMERES DE DIENE MONOHYDROXYLES ET LEURS DERIVES EPOXYDES

(30) Priority: 11.10.1994 US 320807; 11.10.1994 US 320804; 11.10.1994 US 320800; 17.05.1995 US 444080
(43) Date of publication of application: 30.07.1997
(73) Proprietor: SHELL INTERNATIONALE RESEARCH MAATSCHAPPIJ B.V., 2596 HR Den Haag (NL)
(72) Inventor: ERICKSON, James, Robert, Katy, TX 77450 (US); ST. CLAIR, David, John, Houston, TX 77079 (US); MASSE, Michael, Alan, Richmond, TX 77469 (US)
(86) International application number: EP9504012
(87) International publication number: WO9611215

(56) References cited:
- EP-A- 0 564 048
- WO-A-95/15346
- GB-A- 2 028 356
- GB-A- 2 279 350
- US-A- 4 039 593
- DATABASE WPI Derwent Publications Ltd., London, GB; AN 84-027500 & JP,A,58 219 212 (TOYO RUBBER IND) , 20 December 1983

## Description

The present invention relates to monohydroxylated diene polymers which are suitable for use in a variety of applications including adhesives, sealants, coatings and modification of other polymers or asphalt. More specifically, the invention relates to particular epoxidized monohydroxylated polydiene polymers and their epoxidized derivatives.

Monohydroxylated polydienes are known. Most of these polymers are homopolymers of one diene or another. For example, monohydroxlated polybutadienes are known in the art for use in adhesive formulations. United States Patent No. 4,242,468 describes solventless polyurethane coatings having improved flexibility resulting from incorporation of monohydroxylated polybutadienes. Epoxidized versions of hydroxylated polybutadienes are known as well. Low viscosity epoxidized polydiene polymers are also known, especially for use in adhesives. Such polymers are described in U.S. Patents 5,229,464 and 5,247,026.

While the low viscosity polymers of the prior art are useful in applications where aliphatic epoxies are generally employed, they suffer the disadvantage of not being reactive via a broader class of chemistry. Further, epoxidation is costly and many examples of the prior art required high levels of epoxy functionality to be of utility. Incorporation of a more economical moiety which would provide the same or broader chemical utility is highly desirable. The present invention provides polymers which overcome the disadvantages of the aforementioned limited chemical reactivity. Further, in applications requiring epoxy functionality for chemical compatibility these polymers reduce the necessary epoxy levels.

The present invention relates to a monohydroxylatec polydiene polymer which comprises at least two polymerisable ethenically unsaturated hydrocarbon monomers wherein at least one is a diene monomer which yields unsaturation suitable for epoxidation, and wherein the polymer has been hydrogenated such that from 0.1 to 7 meq per gram of polymer of aliphatic double bonds remain. The invention also relates to partially unsaturated and/or epoxidized derivatives of the present monohydroxylated polydiene polymers. The hydroxylated polymers are preferably block copolymers of at least two diene monomers, preferably isoprene and butadiene, and, optionally, a vinyl aromatic hydrocarbon wherein a hydroxyl group is attached at one end of the polymer molecule. These polymers may be hydrogenated or unhydrogenated but they are preferably epoxidized.

The preferred monohydroxylated polydiene polymer of the present invention has the structural formula

(I) (HO)ₓ-A-S_{z}-B-(OH)_{y}

wherein A and B are polymer blocks which may be homopolymer blocks of conjugated diolefin monomers, copolymer blocks of conjugated diolefin monomers, or copolymer blocks of diolefin monomers and monoalkenyl aromatic hydrocarbon monomers. These polymers may contain up to 60% by weight of at least one vinyl aromatic hydrocarbon, preferably styrene. Preferably, the A blocks have a greater concentration of more highly substituted aliphatic double bonds than the B blocks have. Thus, the A blocks have a greater concentration of di-, tri-, or tetra-substituted unsaturation sites (aliphatic double bonds) per unit of block mass than the B blocks have. This produces a polymer wherein the most facile epoxidation occurs in the A blocks. Suitably, the A blocks have a molecular weight in the range of from 100 to 6000, preferably in the range of from 500 to 4,000, and most preferably 1000 to 3000, and the B blocks have a molecular weight in the range of from 1000 to 15,000, preferably in the range of from 2000 to 10,000, and most preferably in the range of from 3000 to 6000. S is a vinyl aromatic hydrocarbon block which may have a molecular weight in the range of from 100 to 10,000. x and y are 0 or 1. Either x or y must be 1, but only one at a time can be 1. z is 0 or 1. Either the A or the B block may be capped with a miniblock of a polymer of a different composition having a molecular weight in the range of from 50 to 1000 to compensate for any initiation, tapering due to unfavourable copolymerisation rates, or capping difficulties. These polymers may be epoxidized such that they contain from 0.1 to 7.0 milliequivalents (meq) of epoxy per gram of polymer.

Polymers containing ethylenic unsaturation can be prepared by anionically copolymerising one or more olefins, particularly diolefins, by themselves or with one or more alkenyl aromatic hydrocarbon monomers. The copolymers may, of course, be random, tapered, block or a combination of these.

Diene containing polymers, having residual unsaturation suitable for epoxidation, may also be obtained by other means of polymerisation, such as by cationic polymerisation or free radical polymerisation. Using cationic polymerisation, monomers such as substituted 1-butenes, 1-pentenes and dienes such as isoprene and butadiene can be copolymerised. Like anionic polymerisation, living cationic polymerisation allows the copolymers to be block copolymers having the residual diene double bond localized within the polymer. Dienes may be polymerised together with acrylic monomers by initiation with a free radical initiator, such a peroxide or AIBN. For pressure sensitive adhesive applications, monomers such as n-butyl acrylate, 2-ethyl-hexyl acrylate and isoprene may be used, and other modifying monomers, such as acrylic acid or 2-hydroxy-ethyl acrylate may also be used. Other polymerisation methods including coordination/insertion mechanisms such as Ziegler-Natta polymerisations, metallocene polymerisations, and metathesis polymerisations can be used to make the diene containing polymers.

The polymers containing ethylenic unsaturation or both aromatic and ethylenic unsaturation may be prepared using anionic initiators or polymerisation catalysts. Such polymers may be prepared using bulk, solution or emulsion techniques. When polymerised to high molecular weight, the polymer containing at least ethylenic unsaturation will, generally, be recovered as a solid such as a crumb, a powder, a pellet or the like. When polymerised to low molecular weight, it may be recovered as a liquid.

In general, when solution anionic techniques are used, copolymers of conjugated diolefins, optionally with vinyl aromatic hydrocarbons, are prepared by contacting the monomer or monomers to be polymerised simultaneously or sequentially with an anionic polymerisation initiator such as group IA metals, their alkyls, amides, silanolates, naphthalides, biphenyls or anthracenyl derivatives. It is preferred to use an organo alkali metal (such as sodium or potassium) compound in a suitable solvent at a temperature within the range of from -150°C to 300°C, preferably at a temperature within the range of from 0°C to 100°C. Particularly effective anionic polymerisation initiators are organo lithium compounds having the general formula:

RLiₙ

wherein R is an aliphatic, cycloaliphatic, aromatic or alkyl-substituted aromatic hydrocarbon radical having from 1 to 20 carbon atoms and n is an integer of 1 to 4.

Conjugated diolefins which may be polymerised anionically include those conjugated diolefins containing from 4 to 24 carbon atoms such as 1,3-butadiene, isoprene, piperylene, methylpentadiene, phenyl-butadiene, 3,4-dimethyl-1,3-hexadiene, 4,5-diethyl-1,3-octadiene and the like. Isoprene and butadiene are the preferred conjugated diene monomers for use in the present invention because of their low cost and ready availability. Alkenyl (vinyl) aromatic hydrocarbons which may be copolymerised include vinyl aryl compounds such as styrene, various alkyl-substituted styrenes, alkoxy-substituted styrenes, vinyl naphthalene, alkyl-substituted vinyl naphthalenes and the like.

The monohydroxylated polydienes can be synthesized by anionic polymerisation of conjugated diene hydrocarbons with lithium initiators. This process is well known and described in U.S. Patents Nos. 4,039,593 and Re. 27,145 which descriptions are hereby incorporated by reference. Polymerisation commences with a monolithium initiator which builds a living polymer backbone at each lithium site. Typical monolithium living polymer structures containing conjugated diene hydrocarbons are:

X-A-B-Li

X-A-B-A-Li

wherein B represents polymerised units of one conjugated diene hydrocarbon such as butadiene, A represents polymerised units of another conjugated diene such as isoprene, and either A or B may contain one or more vinyl aromatic compounds such as styrene, and X is the residue of a monolithium initiator such as sec-butyllithium. The hydroxyl groups can be added by terminal capping the polymerisation with oxiranes such as ethylene oxide followed by termination with methanol.

Monohydroxy diene polymers can also be made using a mono-lithium initiator which contains a hydroxyl group which has been blocked as the silyl ether. A suitable initiator is hydroxyporoyllithium in which the hydroxyl group is blocked as the tert-butyl-dimethylsilyl ether. This mono-lithium initiator can be used to polymerise isoprene or butadiene in hydrocarbon or polar solvent. The living polymer is then terminated with methanol. The silyl ether is then removed by acid catalysed cleavage in the presence of water yielding the desired monohydroxy polydiene polymer.

When one of the conjugated dienes is 1,3-butadiene and it will be hydrogenated, the anionic polymerisation of the conjugated diene hydrocarbons is typically controlled with structure modifiers such as diethylether or glyme (1,2-diethoxyethane) to obtain the desired amount of 1,4-addition. As described in Re 27,145 which is hereby incorporated by reference, the level of 1,2-addition of a butadiene polymer or copolymer can greatly affect elastomeric properties after hydrogenation. The hydrogenated polymers exhibit improved heat stability and weatherability in the final adhesive, sealant or coating.

The most preferred polymers are diblock polymers which fall within the scope of formula (I) mentioned above. The overall molecular weight of such diblocks may range of from 1500 to 20000, preferably of from 3000 to 7000. Either of the blocks in the diblock may contain some randomly polymerised vinyl aromatic hydrocarbon as described above. For example, where I represents isoprene, B represents butadiene, S represents styrene, and a slash (/) represents a random copolymer block, the diblocks may have the following structures:
I-B-OH I-B/S-OH I/S-B-OH I-I/B-OH or
B/I-B/S-OH B-B/S-OH I-EB-OH I-EB/S-OH or
I-S/EB-OH I/S-EB-OH HO-I-S/B HO-I-S/EB
where EB is hydrogenated butadiene, -EB/S-OH means that the hydroxyl source is attached to a polystyrene block, and -S/EB-OH signifies that the hydroxyl source is attached to a hydrogenated polybutadiene block. In the latter case, -S/EB-OH, requires capping of the S/EB "random copolymer" block with a mini EB block to compensate for the tapering tendency of the styrene prior to capping with ethylene oxide. These diblocks are advantageous in that they exhibit lower viscosity and are easier to manufacture than the corresponding triblock polymers. Preferably the hydroxyl is attached to the butadiene block because the epoxidation proceeds more favourably with isoprene, and there will be a separation between the functionalities on the polymer. However, the hydroxyl may also be attached to the isoprene block, if desired. This produces a more surfactant-like molecule with less load bearing capacity. The isoprene blocks may also be hydrogenated.

Certain triblock copolymers can also suitably be used. Such triblocks usually include a styrene block or randomly copolymerised styrene to increase the polymers glass transition temperature, compatibility with polar materials, strength, and room temperature viscosity. These triblocks include the following specific structures: I-EB/S-EB-OH I-B/S-B-OH I-S-EB-OH I-S-B-OH or
I-I/S-I-OH I-S-I-OH B-S-B-OH B-B/S-B-OH or
I-B/S-I-OH I-EB/S-I-OH or
I-B-S-OH I-EB-S-OH HO-I-EB-S

The latter group of polymers specified in the last line above wherein the styrene block is external are represented by the formula

(II) (HO)ₓ-A-B-S-(OH)_{y}

wherein A, B, S, x, and y are as defined above.

Epoxidation of the base polymer can be effected by reaction with organic peracids which can be preformed or formed in situ. Suitable preformed peracids include peracetic and perbenzoic acids. In situ formation may be accomplished by using hydrogen peroxide and a low molecular weight fatty acid such as formic acid. Alternatively, hydrogen peroxide in the presence of acetic acid or acetic anhydride and a cationic exchange resin will form a peracid. The cationic exchange resin can optionally be replaced by a strong acid such as sulphuric acid or p-toluenesulphonic acid. The epoxidation reaction can be conducted directly in the polymerisation cement (polymer solution in which the polymer was polymerised) or, alternatively, the polymer can be redissolved in an inert solvent. These methods are described in detail in U. S. Patents 5,229,464 and 5,247,026 which are hereby incorporated by reference. In particular, it have been found that when using peracetic acid for the epoxidation, the rate of epoxidation of residual aliphatic double bonds in polyisoprene and polybutadiene is the following: 1,4-polyisoprene (tri-substituted aliphatic double bonds) > 1,4-polybutadiene (1,2-di-substituted aliphatic double bonds) > 3,4-polyisoprene (1,1-di-substituted aliphatic double bonds) > 1,2-polybutadiene (mono-substituted aliphatic double bonds). Neither 1,2-polybutadiene nor polystyrene have been observed to epoxidize.

The molecular weights of linear polymers or unassembled linear segments of polymers such as mono-, di-, triblock, etc., arms of star polymers before coupling are conveniently measured by Gel Permeation Chromatography (GPC), where the GPC system has been appropriately calibrated. For anionically polymerised linear polymers, the polymer is essentially monodisperse (weight average molecular weight/number average molecular weight ratio approaches unity), and it is both convenient and adequately descriptive to report the "peak" molecular weight of the narrow molecular weight distribution observed. Usually, the peak value is between the number and the weight average. The peak molecular weight is the molecular weight of the main species shown on the chromatograph. For polydisperse polymers, the weight average molecular weight should be calculated from the chromatograph and used. For materials to be used in the columns of the GPC, styrene-divinyl benzene gels or silica gels are commonly used and are excellent materials. Tetrahydrofuran is an excellent solvent for polymers of the type described herein. A refractive index detector may be used.

If desired, these block copolymers can be partially hydrogenated. Hydrogenation may be effected selectively as for instance disclosed in U.S. Patent Reissue 27,145 which is hereby incorporated by reference. The hydrogenation of these polymers and copolymers may be carried out by a variety of well established processes including hydrogenation in the presence of such catalysts as Raney Nickel, nobel metals such as platinum and the like, soluble transition metal catalysts and titanium catalysts as described in U.S. Patent 5,039,755 which is also hereby incorporated by reference. The polymers may have different diene blocks and these diene blocks may be selectively hydrogenated as described in U.S. Patent 5,229,464 which is also hereby incorporated by reference. Partially unsaturated hydroxylated polymers are preferred for further functionalization such as to make the epoxidized polymers of this invention. They can also be chlorinated, brominated, or reacted with maleic anhydride, or used directly for vulcanization or reaction with amino resins. Preferably, the partial unsaturation is such that 0.1 to 7 meq/g of aliphatic double bonds remain for subsequent epoxidation.

The epoxidized derivatives of these polymers may be used in pressure sensitive adhesives, films, sealants, coatings, structural adhesives, laminating adhesives, pressure sensitive structural adhesives, printing plates, and in the modification of other polymers and\or asphalt (i.e., blends with other polymers and\or asphalt for the purpose of altering the properties of those materials). The unepoxidized polymers may be used in applications for which other monohydroxlated polymers have been commonly used, including as part of a binder system for adhesives. However, their primary utility is to be functionalized, such as by epoxidation, to form useful functionalized derivatives.

The present invention also relates to a composition comprising any of the epoxidized monohydroxylated polydiene polymers as described hereinbefore and a tackifying resin. Such a composition is useful in pressure sensitive adhesives and sealants. Suitably, the tackifying resn is added in an amount of from 20 to 400 parts per hundred parts of polymer. A common tackifying resin is a diene-olefin copolymer of piperylene and 2-methyl-2-butene having a softening point of about 95C. This resin is available commercially under the tradename WINGTACK 95 (WINGTACK is a trade mark) and is prepared by the cationic polymerisation of 60% piperlene, 10% isoprene, 5% cyclo-pentadiene, 15% 2-methyl-2-butene and about 10% dimer, as taught in U.S. Patent No. 3,577,398. Other tackifying resins may be employed wherein the resinous copolymer comprises 20-80 weight percent of piperylene and 80-20 weight percent of 2-methyl-2-butene. The resins normally have ring and ball softening points as determined by ASTM method E28 between about 80°C and 115°C.

Aromatic resins may also be employed as tackifying resins, provided that they are compatible with the particular polymer used in the formulation. Normally, these resins should also have ring and ball softening points between 80°C and 115°C although mixtures of aromatic resins having high and low softening points may also be used. Useful resins include coumarone-indene resins, polystyrene resins, vinyl toluene-alpha methylstyrene copolymers and polyindene resins.

Other adhesion promoting resins which are also useful in the compositions of this invention include hydrogenated rosns, esters of rosins, polyterpenes, terpenephenol resins and polymerized mixed olefins, lower softening point resins and liquid resins. An example of a liquid resin is ADTAC LV resin (ADTAC is a trade mark) from HERCULES. To obtain good thermo-oxidative and color stability, it is preferred that the tackifying resin be a saturated resin, e.g., a hydrogenated dicyclopentadiene resin such as ESCOREZ 5000 (ESCOREZ is a trade mark) series resin made by EXXON or a hydrogenated polystyrene or polyalphamethylstyrene resin such as REGALREZ resin made by HERCULES. Softening points of solid resins may be from 40°C to 120°C. Liquid resins, i.e., softening points less than room temperature, may be used as well as combinations of solid and liquid resins. The amount of adhesion promoting resin employed varies from 20 to 400 parts by weight per hundred parts rubber (phr), preferably between 20 to 350 phr, most preferably 50 to 250 phr. The selection of the particular tackifying agent is, in large part, dependent upon the specific polymer employed in the respective adhesive and sealant composition.

The present invention further relates to a crosslinkable composition comprising any of the epoxidized monohydroxylated polydiene polymers as described hereinbefore and an amino resin. For the purposes of this invention, an amino resin is a resin made by reaction of a material bearing NH groups with a carbonyl compound and an alcohol. The NH bearing material is commonly urea, melamine, benzoguanamine, glycoluril, cyclic ureas, thioureas, guanidines, urethanes, cyanamides, etc. The most common carbonyl component is formaldehyde and other carbonyl compounds include higher aldehydes and ketones. The most commonly used alcohols are methanol, ethanol, and butanol. Other alcohols include propanol, hexanol, etc. AMERICAN CYANAMID (renamed CYTEC) sells a variety of these amino resins, as do other manufacturers. AMERICAN CYANAMID's literature describes the three following classes or "types" of amino resins that they offer for sale. 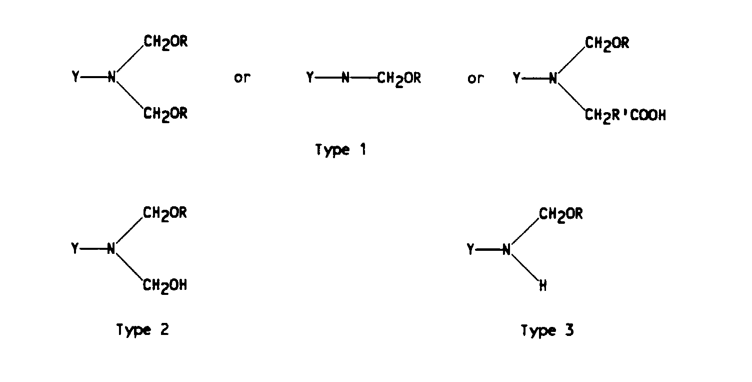 wherein Y is the material that bore the NH groups, the carbonyl source was formaldehyde and R is the alkyl group from the alcohol used for alkylation. Although this type of description depicts the amino resins as monomeric material of only one pure type, the commercial resins exist as mixtures of monomers, dimers, trimers, etc. and any given resin may have some character of the other types. Dimers, trimers, etc. also contain methylene or ether bridges. Generally, type 1 amino resins are preferred in the present invention.

The amino resin must be compatible with the epoxidized monohydroxylated polydiene polymer. A compatible amino resin is defined as one which gives a phase stable blend with the monohydroxylated polydiene polymer at the desired concentration and at the temperature to which the mixture will be heated as the composition is being mixed and applied.

For example, the following type 1 amino resins can be used to achieve the purpose of the present invention: CYMEL 1156 (CYMEL is a trade mark) - a melamine-formaldehyde resin where R is C₄H₉, CYMEL 1170 - a glycoluril- formaldehyde resin wherein R is C₄H₉, CYMEL 1141 -a carboxyl modified amino resin wherein R is a mixture of CH₃ and i-C₄H₉, and BEETLE 80 (BEETLE is a trade mark) - a urea-formaldehyde resin where R is C₄H₉. All of these products are made by American Cyanamid Company and are described in its publication 50 Years of Amino Coating Resins, edited and written by Albert J. Kirsch, published in 1986 along with other amino resins useful in the present invention.

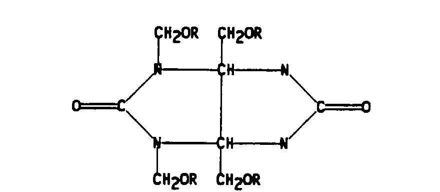

CYMEL 1170 is the following glycoluril-formaldehyde resin wherein R is C₄H₉: Another is BEETLE 80 urea-formaldehyde resin wherein R is C₄H₉ whose ideal monomeric structure is depicted:

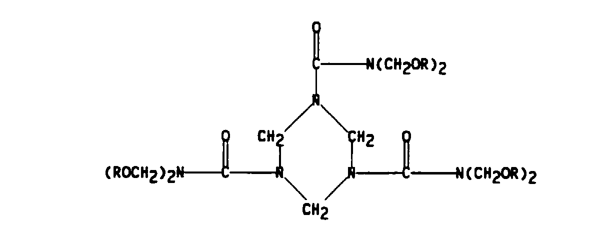

In the present crosslinkable composition, the epoxidized monohydroxylated polydiene polymer suitably comprises from 50 to 98% by weight (%w) of the polymer/amine resin composition. Thus, the amino resin comprises from 50 to 2%w of the composition.

In addition to an amino resin the present crosslinkable composition may contain a reinforcing agent. Suitable reinforcing agents include ethylene glycol, 1,3-propane diol, 1,4-butane diol, 2-methyl-1,2-propane diol, 1,6-hexane diol, 2-methyl-1,3-propane diol, 2-ethyl-1,3-hexanediol, 2,2,4-trimethyl-1,3-pentane diol, cyclohexane dimethonal, bisphenol A, neopentyl glycol, glycerol, trimethyloethane and trimethylol propane.

Suitably, such crosslinkable composition comprises from 30 to 90 percent by weight of the epoxidized monohydroxylated polydiene polymer, from 8 to 60 percent by weight of the amino resin crosslinking agent, and from 2 to 40 percent by weight of the reinforcing agent.

The crosslinked materials as described hereinabove are useful in adhesives (including pressure sensitive adhesives, contact adhesives, laminating adhesives, assembly adhesives and structural adhesives), sealants, coatings, and films (such as those requiring heat and solvent resistance).

### Examples 1-6

In the Examples several adhesives tests are used to demonstrate the properties of test formulations using the improved binders of this invention. The degree of covalent cure obtained for each of the adhesive samples was measured by use of a polymer gel content test developed by J. R. Erickson for radiation curing adhesives, and first described in the article "Experimental Thermoplastic Rubbers for Enhanced Radiation Crosslinking of Hot Melt PSA's", TAPPI 1985 Hot Melt Symposium Proceedings, June 1985. The method as practiced for the present examples is essentially identical to the method as published, but for a few minor improvements and corrections. The w % values indicate the weight percentage of the binder polymers that are covalently attached to the three dimensional gel network. 180° Peel from polished steel was determined using Pressure Sensitive Tape Council Method No. 1. Large values indicate high strength when peeling a test tape form the substrate. Loop Tack (LT) was determined using a TLMI Loop Tack Tester. Polyken Probe Tack (PPT) was determined by ASTM D2979. High values for LT and PPT indicate aggressive tack. Holding Power (HP) is the time required to pull a standard area (2.54 cm x 2.54 cm) of tape from a standard test surface (Mylar, steel) under a standard load (500 g, 2 Kg), in 2° antipeel (Pressure Sensitive Tape Council Method No. 7), at a certain temperature (23°C, 95°C). Long times indicate high adhesive and cohesive strength. Shear Adhesion Failure Test (SAFT) is similar to HP, except that the temperature at which failure occurs is recorded. SAFT is carried out in a oven that ramps up at a rate of 40°F per hour. High temperature values indicate high cohesive and adhesive strength.

A number of the polymers are used in the binder systems of Examples 1 and 2. Many of their important characteristics are given in the table below.

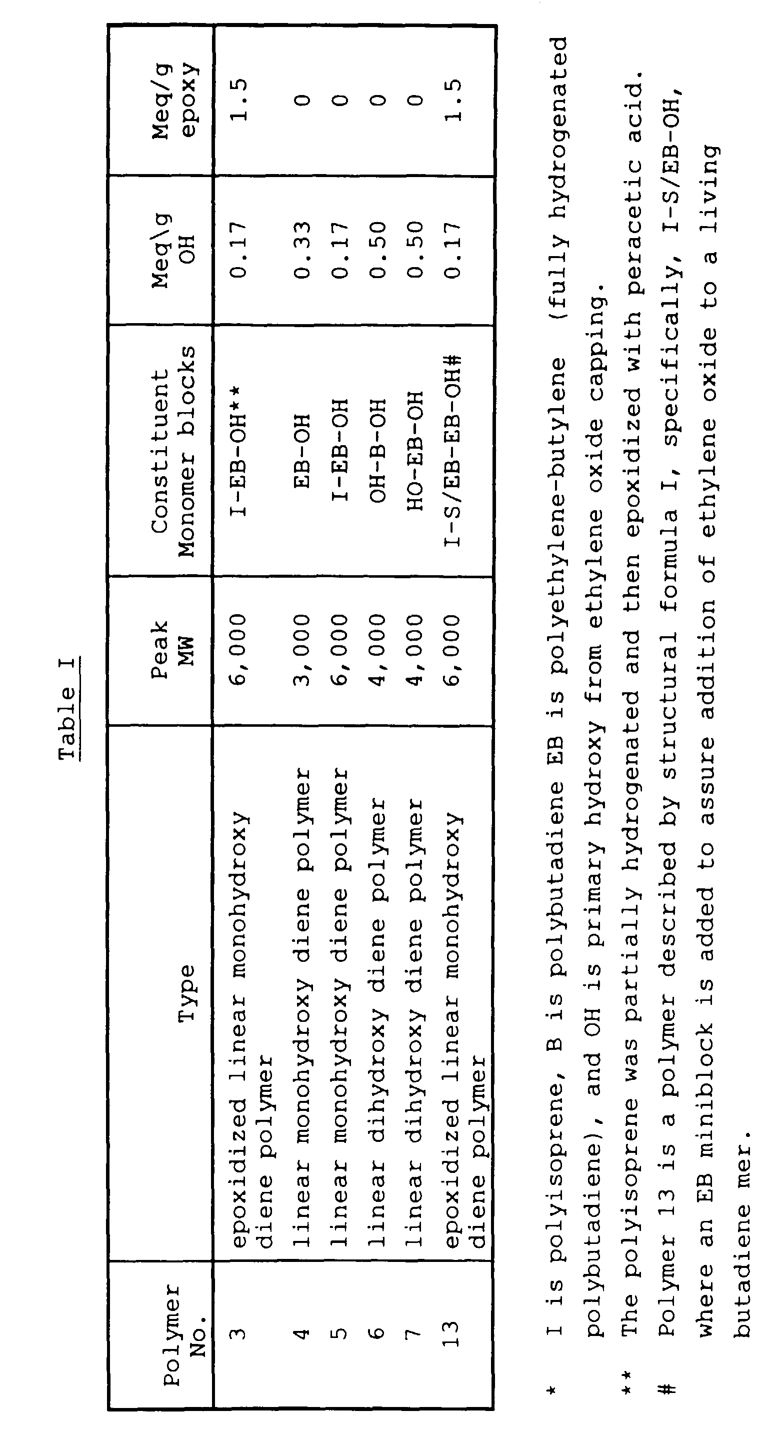

A number of other formulation ingredients are also used in these Examples , and they are described in the table below.

| DESCRIPTION OF FORMULATION INGREDIENTS IN EXAMPLES 1-6 | | |
|---|---|---|
| Name | Description | Supplier |
| UVI 6974 | sulphonium salt cationic photoinitiator | Union Carbide |
| IRGANOX 1010 | phenolic type antioxidant | Ciba-Geigy |
| REGALREZ 1085 | hydrogenated tackifying resin | Hercules |

### Example 1

Adhesive 1, as shown in Table 2, was prepared, cast, and cured by solvent mixing all of the ingredients at room temperature using tetrahydrofuran (THF) as the solvent. The adhesive solution was cast onto a clean 2.54 10⁻²mm Mylar sheet. Final dry film thickness of the adhesive was 5 mils. The test film was directly UV cured, with the adhesive facing the incoming radiation at 30 feet per minute (fpm) conveyor speed under a single medium pressure H_{g} bulb, using a Linde Photocure processor. A nitrogen atmosphere was used only for the purpose of reducing ozone from the bulb, as cationic systems do not need an oxygen free atmosphere to cure. A lightbug was also passed under the lamp to measure the radiation dose. A dose of 150-160 mJ/cm was recorded. Immediately after the UV exposure, the test adhesive was postbaked for 10 minutes at 121°C. It was tested for properties which are also shown in Table 2.

Adhesive 1 is a compound wherein the epoxidized diene polymer also contains a hydroxy group. The cure of adhesive 1 is excellent, as are its aggressive tack and SAFT. It gives all indications of having excellent cohesive strength, yet it exhibited viscous splitting during the room temperature HP test, an apparent spurious result.

**Table 2 -**

| Monohydroxy Diene Polymer Binder 100 part formulations shown with results | | |
|---|---|---|
| Ingredient | 1 | |
| Polymer 3 | 24.3 | |
| Polymer 4 EB-OH 3.0K | 25.3 | |
| Regalrez 1085 | 49.7 | |
| UVI 6974 | 0.5 | |
| Irganox 1010 | 0.15 | |
| | | |
| Ratio of Epoxide to Hydroxyl | 2.6 | |

| Adhesive Properties after UV cure and postbake: | | |
|---|---|---|
| Gel of binder (w%) | 98 | |
| 180 Peel steel (pli) | 5.3 a | |
| TMI Loop Tack (pli) | 5.1 a | |
| Polyken Probe Tack (Kg) | 1.9 a | |
| SAFT to Mylar, ( C) | >168 | >168 |
| 23 C HP steel, 1 in², 500g (min) | 1168 v | 511 v |
| 95 C Holding Power to Mylar, 1inch square, 0.5 Kg (min) | 0 a | 0 a |

" v" is viscous splitting of the adhesive (adhesion > cohesion) and" a" is adhesive release from substrate interfaces (cohesion > adhesion).

### Example 2

Adhesives 2, 3, and 4, shown in Table 3, were prepared, cast, and cured as described in Example 1. No 180° Peel testing was done because of equipment malfunction. Adhesive 3 had no cohesive strength at all. It remained a "goo" even after UV cure and postbake and was not sufficiently handleable to even perform the gel test, probably because neither polymer was epoxidized. Adhesive 3 used Polymer 5, a polymer similar to Polymer 3 except that it was not epoxidized. Adhesives 3 and 4 have good PSA properties.

**Table 2**

| 100 part formulations shown with results | | | |
|---|---|---|---|
| Ingred. | 2 | 3 | 4 |
| Polymer 3 | 24.3 | 0 | 24.2 |
| Polymer 5 | 0 | 24.3 | 0 |
| Polymer 4 | 25.3 | 25.3 | 20.2 |
| Polymer 7 | 0 | 0 | 5.0 |
| Regalrez 1085 | 49.7 | 49.7 | 50.0 |
| UVI 6974 | 0.5 | 0.5 | 0.5 |
| Irganox 1010 | 0.15 | 0.15 | 0.15 |
| w% epoxy diene polymer | 49 | 0 | 49 |
| w% hydroxy diene polymer | 51 | 51 | 51 |
| Ratio of Epoxide to Hydroxy | 2.7 | 0 | 3.1 |

| Adhes. Prop. after cure and postbake | | | |
|---|---|---|---|
| Gel of binder (w%) | 86 | good v | 90 |
| TMI Loop Tack (pli) | 4.8 a | good v | 3.7 a |
| Polyken Probe Tack (Kg) | 2.1 a | good v | 1.9 a |
| 23C HP Steel, 1 in², | >4000 2559 | good v | 3609 a |
| 2 Kg(min) | 1 | | 1133 a |
| SAFT to Mylar (C) | >168 | good v | 67 a |
| | 111 a | | >168 |
| 95C HP Mylar, 1in², | 0 a | good v | 0 a |
| 500g (min) | 0 a | | 0 a |

### Example 3

Formulations were prepared to test the concept of using blends of epoxidized diene polymers with diene monools and diols as laminating adhesives. Laminating adhesives seem to operate via an entirely different mechanism than PSA's which are cast in relatively thick layers. This thick layer is capable of absorbing much energy through viscous flow during deformation and this provides the strength of PSAs. In laminating adhesives, the layers are relatively thin and these adhesive layers must strongly join two substrates together. Because of the thinness, viscous dissipation of energy within the adhesive layer is not a dominant strength mechanism. Rather, the adhesion between adhesive and substrate must provide the required strength.

The polymers used in the laminating adhesive formulations are described in Table 1 and in Example 1. In particular, Polymer 13 is epoxidized I-S/EB-EB-OH, with segment molecular weights 2000-2500/1350-150-OH. The random S/EB block has a strong tendency to taper, where the styrene polymerises last. In making Polymer 13, it was arbitrarily decided to attach the hydroxy source to a hydrogenated polybutadiene block. Therefore to assure that the hydroxy source (ethylene oxide) adds to a polybutadiene block, the 150 molecular weight EB miniblock was added. Polymer 13 is made by polymerising the isoprene in cyclohexane, without ether, and after all the isoprene is polymerised, adding diethyl ether to give 6% of the total solvent. The styrene and butadiene are then added over time and polymerised to completion, followed by the remaining butadiene, after completion of the polybutadiene miniblock polymerisation, the ethylene oxide is added, and then the living polymer is terminated with methanol. The polymer is partially hydrogenated to completely hydrogenate the polybutadiene blocks and some of the polyisoprene blocks. The polystyrene blocks are not hydrogenated. The polymer is washed to remove the hydrogenation catalyst, and then epoxidized with peracetic acid. The epoxidized polymer is washed, stabilized with a small amount of IRGANOX 1010 (IRGANOX is a trade mark) antioxidant, and recovered by solvent evaporation.

Formulations were made according to Table 3. The ingredients were dissolved in THF to prepare a 10% solids solution. Preliminary work indicated that our curing agent, Leecure B1310, would completely dissolve in THF. Partial solubility was found using toluene as the solvent. All ingredients except the B1310 (a blocked BF₃ catalyst from Leepoxy, Inc.) were dissolved in THF. Once dissolved B1310 was added and the solution was placed on a roller for several minutes. The formulation was then cast on a poly(ethylene terephthalate) film to give a nominal adhesive layer thickness of 0.3 mils. The film was allowed to air dry for 1 hour. When dry, another poly(ethylene terephthalate) film was laminated to the top of the adhesive layer. The laminate was pressed together using a 2 lb roller. One inch strips were cut and then heat treated under moderate pressure at 50°C for 60 seconds. The laminates were then tested for strength using a T-peel geometry on an Instron tensile tester. The peel rate was 10 inches per minute.

Table 4 shows the results for laminates as made and then aged at room temperature. The total molecular weight of Polymer 13 is low and so must experience substantial chemical crosslinking to form a load bearing network. With Polymer 13, an improvement was found by adding a monool. Compare control 1 and formulations 3 and 4. Incorporation of the monool alone (formulation 4) gave an increase from immeasurably low strength to 124 gli. Additional incorporation of a diol gave a further increase to 211 gli.

After aging 24 hours the cure reaction continued to proceed. Some increase in T-peel value is seen for all samples. The mode of failure is still cohesive (that is the adhesive layer fails (viscous splitting) rather than the interface). The trends observed for the initial T-peel values are continued at 24 hours.

Incorporation of monool or diol served to increase the strength of the laminating adhesive when the epoxidized polymer was hydroxyl terminated. The best strengths achieved are in the range of 100-400 gli initial T-peel strength.

**TABLE 3**

| Laminating Adhesive Formulations | | | | |
|---|---|---|---|---|
| Ingredients | control 1 | 2 | 3 | 4 |
| Polymer 1 | - | - | - | - |
| Polymer 13 | 1.59 | 2.47 | 1.80 | 1.17 |
| Polymer 4 | - | 1.05 | 0.66 | 1.00 |
| Polymer 6 | - | - | - | 0.26 |
| Regalrez 1085 | 3.27 | 1.26 | 2.42 | 2.45 |
| Leecure B1310 | 0.16 | 0.26 | 0.18 | 0.14 |

**TABLE 4**

| T-peel Results | | | |
|---|---|---|---|
| Formulation | T-peel (grams per linear inch/ A for adhesive, C for cohesive) | | |
| | 0 hrs | 24 hrs | 120 hrs |
| control 2 | 0/C | 3/C | 6/C |
| 2 | 33/C | 95/C | 207/C |
| 3 | 124/C | 119/C | 128/C |
| 4 | 211/C | 236/C | 277/C |

### Example 4

Several performance properties of cured modified epoxy resin compositions of the present invention are important. The tensile properties such as strength, elongation, and Young's modulus are measured according to ASTM D-638. The flexural properties such as flexural modulus, stress and strain at failure are measured according to ASTM D-790. The tensile fracture toughness as characterized by the stress intensity factor (K_{IC}) for crack propagation is measured according to ASTM E-399-83. Using the value of K_{IC} so measured, the fracture energy (G_{IC}) was calculated for the plane strain conditions employed. The adhesive properties such as lap shear stress are measured according to ASTM D-1002. The glass transition temperature (T_{g}) is measured using torsional bar dynamic mechanical analysis.

Table 5 below depicts the composition of the epoxidized polydiene polymers. Monohydroxylated and unhydroxylated epoxidized polydienes are compared.

**Table 5**

| Composition of Epoxidized Polymers | | | | | | |
|---|---|---|---|---|---|---|
| Identification | Base Polymer Architecture | Molecular Weights (in thousands) | Styrene Content (%) | Epoxy Level (meq/ g) | Cloud Point (°C) | Hydrogenated (Y/N)* |
| A | I-B-OH | 0.68-4.08 | 0 | 3.4 | 63 | N |
| Comparative | I-B | 0.88-4.08 | 0 | 4.8 | 68 | N |

| | | | | | | |
|---|---|---|---|---|---|---|
| *Y = Yes, N = No | | | | | | |

In the base polymer architecture column of Table 5, B represents poly(1,3-butadiene) blocks, I represents polyisoprene blocks, and OH represents monohydroxyl functionality. Homopolymer blocks are separated by a dash.

The cloud points of blends of the example polymers in EPON 828 (EPON is a trade mark) resin at a 1/9 ratio by weight are shown in Table 5. A clear and significant advantage is shown for the monohydroxylated epoxidized polymer. Very similar cloud points are achieved for the two polymers but the polymer of the present invention achieved that cloud point with only 3.4 meq/g of epoxy, 1.4 meq/g less than the comparative unhydroxylated polymer.

11 parts of monohydroxylated epoxidized polymer A or 11 parts of the comparative monohydroxylated polymer, both having the base structure I-B were added to 100 parts of EPON 828 resin, a diglycidyl ether of bisphenol-A. 33 parts of EPI-CURE 3140 (EPI-CURE is a trade mark) (a polyamide curing agent) per hundred parts of EPON 828 (EPON is a trade mark) resin plus epoxidized polymer were added to the mixture and stirred by hand. A small amount (less than 1 part per hundred parts of EPON 828 resin plus epoxidized polymer) of PC-1344/monofunctional glycidyl epoxy solution was added to aid in defoaming the mixture. The blend was degassed in vacuum and centrifuged. The blend was cast between glass plates to make 1/8" plaques which were cured at room temperature for 7 days before testing. The mechanical properties of the resultant rubber modified epoxy resins are listed in Table 6 which provides a comparison of these blends and the cured epoxy resin without added epoxidized polymer.

Incorporation of Polymer A and the comparative polymer leads to increases in fracture energy (G_{IC}) of 192% and 92%, respectively, while maintaining good tensile and flexural properties. These results demonstrate that the these epoxidized polymers are effective at achieving a superior balance of properties in epoxy resins cured with polyamides and that the monohydroxylated epoxidized polymer gives superior results to those of the unhydroxylated epoxidized polymer even though the latter has a higher epoxy content.

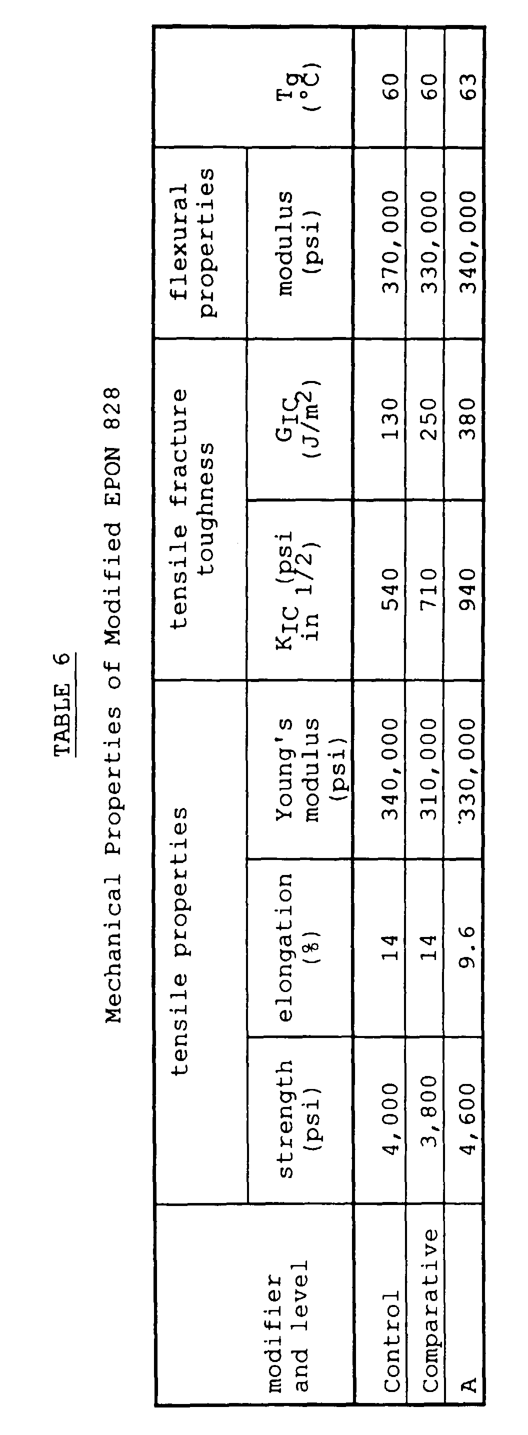

### Example 5

The following examples demonstrate the utility of the epoxidized monohydroxylated polymers in amino resin cured compositions. The amino resin used was CYMEL 1156 (CYMEL is a trade mark), a melamine-formaldehyde resin where R is C₄H₉. The acid used to catalyse the amino resin / hydroxyl and amino resin / epoxy reactions was CYCAT 600 (CYCAT is a trade mark), dodecyl benzene sulphonic acid (a 70%weight solution in isopropyl alcohol). The compositions were mixed and coated from a 65 percent by weight (%w) solids solution of the ingredients in a solvent blend composed of 90%w of an aliphatic hydrocarbon solvent, VM&P naphtha, and 10%w n-butanol. The following formulation, given in parts by weight, was used

| Composition | pbw |
|---|---|
| Polymer | 80 |
| CYMEL 1156 | 18 |
| CYCAT 600 | 2 |
| VM&P Naphtha | 60 |
| n-Butanol | 7 |

The following polymers were tested in this formulation. Polymers 3, 4, 5, and 7 are described in Example 1. Polymer 14 was a 2000 MW polyisoprene (I) - 4000 MW polystyrene / hydrogenated polybutadiene (S/EB) copolymer having a single OH on one end. The 4000 MW S/EB block in Polymer 14 was 2500 MW S and 1500 MW EB. Polymer 13 was an epoxidized version of Polymer 14 (1.5 meq of epoxy/gm polymer). Polymer 16 was a triblock polymer which had the same S/EB copolymer block as Polymer 14. However, Polymer 16 had a 1000 MW block of epoxidized polyisoprene on each end of the S/EB center block and had no OH group.

Coatings, about 2 mil thickness dry, were drawn onto aluminum panels with a #52 wire wound rod. The coatings were cured by baking 20 minutes at 175°C. They were evaluated qualitatively for their suitability for use as coatings. The following are the results.

| Polymer | Type | Appearance of Coating |
|---|---|---|
| 4 | EB-OH | Very Tacky |
| 5 | I-EB-OH | Tacky |
| 14 | I-S/EB-OH | Tacky |
| 3 | Epoxidized I-EB-OH | Non-tacky, elastomeric |
| 13 | Epoxidized I-S/EB-OH | Non-tacky, elastomeric |
| 16 | Epoxidized I-S/EB-I | Non-tacky, elastomeric |
| 7 | HO-EB-OH | Non-tacky, elastomeric |

The results with Polymer 4 clearly show that a melamine cured EB-OH monohydroxylated polydiene polymer made from only one diene monomer is not suitable for use as a coating because it is very sticky. Results with Polymers 5 and 14 show that a monohydroxylated polydiene polymer made from at least two diene monomers and subsequently selectively hydrogenating it, thereby putting an unsaturated I block on the end opposite the OH, performs significantly better than Polymer 4. However, these coatings are still not suitable because they are still sticky. Results for Polymers 3 and 13 show that epoxidation of the I block on the end opposite the OH converts the monohydroxylated polydiene polymers made from at least two diene monomers into useful coating compositions. The results for Polymers 16 and 7 confirm that a polymer with epoxy groups on both ends or an OH group on both ends is useful in coatings, as is already well known.

### Example 6

Coatings made according to the present invention were evaluated for mechanical properties. The appearance (gloss) of the coatings was judged visually. The pencil hardness (gouge) of the coatings was measured according to the ASTM D3363 method of pushing successively softer pencil leads across the coating until the pencil lead will no longer gouge through the coating. The hardness scale (softest to hardest) is 6B<5B<4B<3B<2B<B<HB<F<H<2H<3H<4H<5H<6H. The methyl ethyl ketone (MEK) resistance of the coatings was measured according to the ASTM D4752 method of rubbing an MEK-moistened cloth across the coating for 200 cycles, or until breakthrough to the aluminium substrate occurred (one cycle equals one forward and one backward stroke). Adhesion of the coatings was measured with the cross hatch adhesion test, ASTM D3359, Method B. In this test, a lattice pattern is scribed through the coating, pressure sensitive tape is applied and removed, and the amount of coating removed with the tape is rated. The scale ranges from 5 (no adhesion loss) to 0 (greater than 65% adhesion loss).

The effectiveness of the monohydroxylated diene polymers in improving properties of coatings was tested in two acrylic urethane formulations (5 and 6) using the acrylic polyol and two different triisocyanate curing agents. The compositions of these formulations are given in the table herein below. The hydroxyl (OH) equivalent weight of JONCRYL 510 (JONCRYL is a trade mark) (80%w solids) is 500. The isocyanate (NCO) equivalent weight of DESMODUR Z-4370 (DESMODUR is a trade mark) (70%w solids) and DESMODUR Z-3390 (90%w solids) are 365 and 216, respectively. The acrylic polyol and the triisocyanate curing agents were mixed at 1.1 to 1 NCO to OH molar ratio, the DABCO T-12 catalyst was added, and coatings were applied onto steel panels.

Four different polymers, all having 6000 molecular weight, were compared in the following experiments. Polymer 5 was an epoxidized I-EB-OH (epoxy content 1.5 meq/gm). Polymer 13 was an epoxidized I-S/EB-OH (epoxy content 1.5 meq/gm) and Polymer 14 was its unepoxidized precursor (double bond content 1.7 meq/gm). Polymer 16 was an epoxidized I-S/EB-I (epoxy content 1.2 meq/gm). The polymers were dissolved at 70%w solids content in 2-heptanone which had been previously dried with mol sieves. The polymer solutions were mixed with the triisocyanates and catalyst for 24 hours before the acrylic polyol was added and coatings were applied onto steel panels.

| Formulation | 5 | 6 |
|---|---|---|
| Component | parts by weight(pbw) | pbw |
| JONCRYL 510 | 500 | 500 |
| DESMODUR Z-4370 | 402 | - |
| DESMODUR N-3390 | - | 238 |
| Polymer | 170 | 154 |
| DABCO T-12 | 0.8 | 0.8 |
| 2-Heptanone | 166 | 193 |

The solutions were checked to see if they were phase stable and those which did not phase separate were drawn down onto steel panels (D36 CRS panels from Q-Panel Corp.) using a #22 wire wound rod. The coatings were tested after being held at room temperature for two weeks. The following result were obtained.

In formulation 5, the solution with Polymer 5 phase separated. All the other polymers gave phase stable solutions and so were cast as coatings, the properties of which are shown in the following table.

| Polymer | None | Polymer 13 | Polymer 14 | Polymer 16 |
|---|---|---|---|---|
| Properties | | | | |
| Thickness,mil | 0.7 | 0.8 | 0.7 | 0.7 |
| Pencil hardness | 2H | H | F | F |
| MEK rubs | 14 | 3 | 2 | 7 |
| Adhesion | 2 | 4 | 4 | 4 |
| Gloss | High | High | High | High |
| Tack | None | None | None | Tacky |

The fact that Polymer 5 phase separated shows that the polymer must have some styrene in order to gain compatibility with this acrylic/isocyanate system. Polymers 13 and 14, with and without epoxy, both influenced the properties of the acrylic urethane to about the same extent - both reduced the hardness and increased the adhesion. The results on Polymer 16 show that, although its styrene content was sufficient to give a phase stable solution, it made the cured coating tacky and therefore is unsuitable. Thus, the hydroxyl group on Polymers 15 and 14 is required to achieve satisfactory performance.

In formulation 6, the only polymer which gave a phase stable blend was Polymer 13. These results clearly show that, in this case, styrene is required in the polymer, the I block must be epoxidized,and the OH group is required. The coating properties for Polymer 13 in Formulation 6 are shown in the following table.

| Polymer | None | Polymer 13 |
|---|---|---|
| Properties | | |
| Thickness,mil | 0.6 | 0.8 |
| Pencil hardness | 2H | 2H |
| MEK rubs | 6 | 7 |
| Adhesion | 1 | 5 |
| Gloss | High | High |
| Tack | None | None |

These results show that Polymer 13 gives a dramatic improvement in adhesion with no apparent reduction in other properties.

### Example 7

Several adhesives tests are used to demonstrate the properties of test formulations using the binders which comprise a tackifying resin. The degree of covalent cure obtained for each of the adhesive samples was measured as described in Examples 1-6.

A number of polymers are used in the binder systems. Many of their important characteristics are given in the table below.

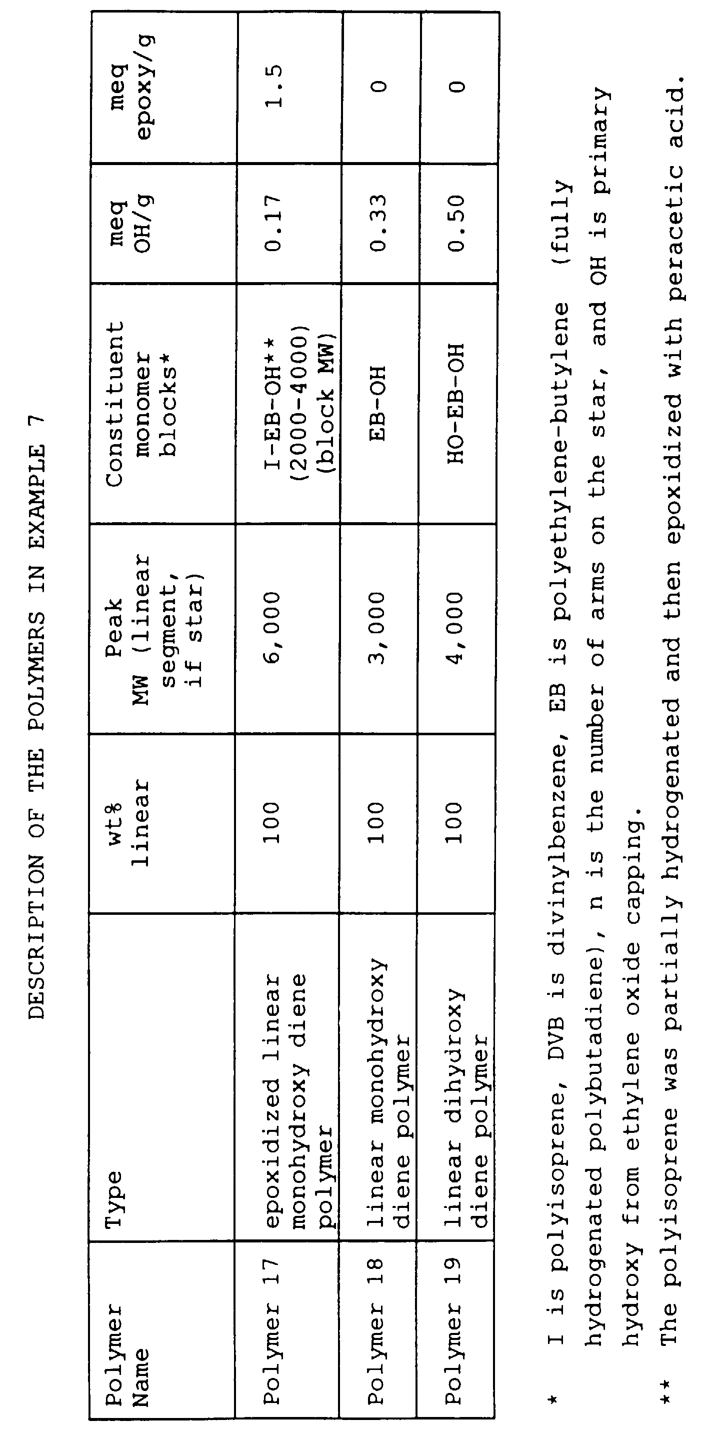

A number of other formulation ingredients are also used in this example and they are described in the table below.

| DESCRIPTION OF FORMULATION INGREDIENTS IN EXAMPLE 7 | | |
|---|---|---|
| Name | Description | Supplier |
| UVI 6974 | sulphonium salt cationic photoinitiator | Union Carbide |
| Irganox 1010 | phenolic type antioxidant | Ciba-Geigy Hercules |
| Regalrez 1085 | hydrogenated tackifying resin | |

Adhesives A, B, and C , shown on the top of the Table below, were prepared by solvent mixing all of the ingredients at room temperature using tetrahydrofuran as the solvent. The adhesive solutions were cast onto clean 2.54 10⁻²mm Mylar sheets. The final dry film thickness of the adhesives was 5 mils. The test films were directly UV cured using 150-160 mJ/cm of UV radiation by passing them under a medium pressure mercury bulb at 30 feet per minute. Immediately after UV exposure, the test adhesives were postbaked for 10 minutes at 121°C.

Excellent pressure sensitive adhesives were prepared. They cure well to give high gel contents and they have excellent aggressive tack and excellent cohesive strength.

**Table -**

| Pressure Sensitive Adhesives 100 part formulations shown with results | | | |
|---|---|---|---|
| Ingredient | A | B | C |
| Polymer 17 | 24.2 | 24.3 | 24.3 |
| Polymer 18 | 20.2 | 25.3 | 25.3 |
| Polymer 19 | 5.0 | 0 | 0 |
| Regalrez 1085 | 50.0 | 49.7 | 49.7 |
| UVI 6974 | 0.5 | 0.5 | 0.5 |
| Irganox 1010 | 0.15 | 0.15 | 0.15 |

| Adhesive Properties afterUV cure and postbake: | | | |
|---|---|---|---|
| Gel of binder (w%) | 90 | 86 | 98 |
| 180° Peel steel (pli) | - | - | 5.3 a |
| TMI Loop Tack (pli) | 3.7 a | 4.8 a | 5.1 a |
| Polyken Probe Tack (Kg) | 1.9 a | 2.1 a | 1.9 a |
| SAFT to Mylar, (° C) | >168 67 a | >168 111 a | >168 >168 |
| 23° C HP steel, 1 in², 500g (min) | 3609 a 1133 a | >4000 2559 | 1168 v * 511 v |
| 95 C Holding Power to Mylar, 1 inch square, 0.5 Kg (min) | 0 a 0 a | 0 a 0 a | 0 a 0a |

| | | | |
|---|---|---|---|
| "a is adhesive release from the substrate interfaces (cohesion > adhesion) and "v" is viscous splitting of the adhesive (adhesion > cohesion). * The viscous splitting observed during the room temperature HP test seems to be a spurious result. | | | |

### Example 8

The following Example demonstrate the utility of the epoxidized monohydroxylated polymers in amino resin cured compositions. The amino resin used was CYMEL 1156, a melamine-formaldehyde resin wherein R is C₄H₉. The acid used to catalyse the amino resin / hydroxyl and amino resin / epoxy reactions was CYCAT 600, dodecyl benzene sulphonic acid (a 70%weight solution in isopropyl alcohol). The compositions were mixed and coated from a 65 percent by weight (%w) solids solution of the ingredients in a solvent blend composed of 90%w of an aliphatic hydrocarbon solvent, VM&P naphtha, and 10%w n-butanol. The following formulation, given in parts by weight, was used.

| Composition | pbw |
|---|---|
| Polymer | 80 |
| CYMEL 1156 | 18 |
| CYCAT 600 | 2 |
| VM&P Naphtha | 60 |
| n-Butanol | 7 |

The following polymers were tested in this formulation. Polymer 20 was a 3000 molecular weight (MW) hydrogenated polybutadiene (EB) having a single hydroxyl group (OH) on one end. Polymer 21 was a 2000 MW polyisoprene (I) - 4000 MW hydrogenated polybutadiene (EB) diblock polymer having a single OH on one end. Polymer 22 was a 2000 MW polyisoprene (I) - 4000 MW polystyrene / hydrogenated polybutadiene (S/EB) copolymer having a single OH on one end. The 4000 MW S/EB block in Polymer 22 was 2500 MW S and 1500 MW EB. Polymer 23 was Polymer 21 epoxidized to an epoxy content of 1.5 meq/gm. Polymer 24 was Polymer 22 epoxidized to an epoxy content of 1.5 meq/gm. Polymer 25 is a triblock polymer which had the same S/EB copolymer block as Polymer 22. However, Polymer 25 had a 1000 MW block of epoxidized polyisoprene on each end of the S/EB center block and had no OH group. Polymer 26 was a 4000 MW hydrogenated polybutadiene (EB) having a single OH group on both ends.

Coatings, about 5.08 x 10⁻² mm thickness dry, were drawn onto aluminum panels with a #52 wire wound rod. The coatings were cured by baking 20 minutes at 175°C. They were evaluated qualitatively for their suitability for use as coatings. The following are the results.

| Polymer | Type | Appearance of Coating |
|---|---|---|
| 20 | EB-OH | Very Tacky |
| 21 | I-EB-OH | Tacky |
| 22 | I-S/EB-OH | Tacky |
| 23 | Epoxidized I-EB-OH | Non-tacky, elastomeric |
| 24 | Epoxidized I-S/EB-OH | Non-tacky, elastomeric |
| 25 | Epoxidized I-S/EB-I | Non-tacky, elastomeric |
| 26 | HO-EB-OH | Non-tacky, elastomeric |

Results with Polymer 20 clearly show that a melamine cured EB-OH monohydroxylated polydiene polymer made from only one diene monomer is not suitable for use as a coating because it is very sticky. Results with Polymers 21 and 22 show that a monohydroxylated polydiene polymer made from at least two diene monomers and subsequently selectively hydrogenating it, thereby putting an unsaturated I block on the end opposite the OH, performs significantly better than Polymer 20. However, these coatings are still not suitable because they are still sticky. Results for Polymers 23 and 24 show that epoxidation of the I block on the end opposite the OH converts the monohydroxylated polydiene polymers made from at least two diene monomers into useful coating compositions. Results for Polymers 25 and 26 confirm that a polymer with epoxy groups on both ends or an OH group on both ends is useful in coatings, as is already known.

## Claims

1. A monohydroxylated polydiene polymer which comprises at least two polymerisable ethylenically unsaturated hydrocarbon monomers wherein at least one is a diene monomer which yields unsaturation suitable for epoxidation, and wherein the polymer has been hydrogenated such that from 0.1 to 7 meq per gram of polymer of aliphatic double bonds remain.

2. The polydiene polymer according to claim 1 which has the formula
(HO)ₓ-A-S_{z}-B-(OH)_{y} or (HO)ₓA-B-S(OH)_{y}
wherein A and B are polymer blocks which may be homopolymer blocks of conjugated diolefin monomers, copolymer blocks of conjugated diolefin monomers, or copolymer blocks of diolefin monomers and monoalkenyl aromatic hydrocarbon monomers, S is a vinyl aromatic hydrocarbon block, x and y are 0 or 1 and either x or y must be 1, but only one at a time can be 1, and z is 0 or 1.

3. The polydiene polymer according to claim 2 wherein the A blocks have a molecular weight in the range of from 100 to 6000 and the B blocks have a molecular weight in the range of from 1000 to 15,000.

4. The polydiene polymer according to claim 2 or 3 wherein A is isoprene and B is butadiene.

5. The polymer according to any one of claims 2 to 4 which has a structure selected from the group consisting of I-B-OH, I-S/B-OH, I-EB-OH, and I-S/EB-OH where I is an isoprene block, B is a butadiene block, EB is a hydrogenated butadiene block, S is a styrene block, and OH is a hydroxyl group.

6. An epoxidized monohydroxylated polydiene polymer comprising a polydiene polymer according to any one of claims 1 to 5 which polymer has been epoxidized such that it contains from 0.1 to 7.0 meq of epoxy per gram of polymer.

7. A composition comprising the polymer according to claim 6 and a tackifying resin.

8. A composition comprising the polymer according to claim 6 and a compatible amino resin.

9. A composition according to claim 8 which comprises in addition a reinforcing agent.

10. An adhesive comprising the polymer or composition according to any one of claims 1 to 9.

11. A sealant comprising the polymer or composition according to any one of claims 1 to 9.

## Patentansprüche

1. Monohydroxyliertes Polydienpolymer, das wenigstens zwei polymerisierbare, ethylenisch ungesättigte Kohlenwasserstoffmonomere umfaßt, wobei wenigstens eines ein Dienmonomer ist, das eine für die Epoxydierung geeignete Unsättigung ergibt, und worin das Polymer derart hydriert worden ist, daß 0,1 bis 7 Milliäquivalente pro Gramm Polymer an aliphatischen Doppelbindungen verbleiben.

2. Polydienpolymer nach Anspruch 1, das die Formel
(HO)ₓ-A-S_{z}-B-(OH)_{y} oder (HO)ₓ-A-B-S(OH)_{y}
aufweist, worin A und B Polymerblöcke darstellen, die Homopolymerblöcke aus konjugierten Diolefinmonomeren, Copolymerblöcke aus konjugierten Diolefinmonomeren oder Copolymerblöcke aus Diolefinmonomeren und monoalkenylaromatischen Kohlenwasserstoffmonomeren sein können, S ein vinylaromatischer Kohlenwasserstoffblock ist, x und y für 0 oder 1 stehen und entweder x oder y 1 betragen muß, aber jeweils nur einer 1 sein kann, und z den Wert 0 oder 1 hat.

3. Polydienpolymer nach Anspruch 2, worin die Blöcke A ein Molekulargewicht im Bereich von 100 bis 6.000 aufweisen und die Blöcke ein Molekulargewicht im Bereich von 1.000 bis 15.000 haben.

4. Polydienpolymer nach Anspruch 2 oder 3, worin A Isopren ist und B Polydien darstellt.

5. Polymer nach einem der Ansprüche 2 bis 4, das eine aus der aus I-B-OH, I-S/B-OH, I-EB-OH und I-S/EB-OH bestehenden Gruppe ausgewählte Struktur aufweist, worin I einen Isoprenblock darstellt, B ein Butadienblock ist, EB für einen hydrierten Butadienblock steht, S einen Styrolblock bezeichnet und OH eine Hydroxylgruppe darstellt.

6. Epoxidiertes monohydroxyliertes Polydienpolymer, umfassend ein Polydienpolymer nach einem der Ansprüche 1 bis 5, welches Polymer derart epoxidiert worden ist, daß es 0,1 bis 7,0 Milliäquivalente Epoxy je Gramm Polymer enthält.

7. Zusammensetzung, umfassend das Polymer nach Anspruch 6 und ein klebrigmachendes Harz.

8. Zusammensetzung, umfassend das Polymer nach Anspruch 6 und ein verträgliches Aminoharz.

9. Zusammensetzung nach Anspruch 8, das zusätzlich ein Verstärkungsmittel umfaßt.

10. Klebstoff, umfassend das Polymer oder die Zusammensetzung nach einem der Ansprüche 1 bis 9.

11. Dichtmittel, umfassend das Polymer oder die Zusammensetzung nach einem der Ansprüche 1 bis 9.

## Revendications

1. Polymère de polydiène monohydroxylé qui comprend au moins deux monomères hydrocarbonés éthyléniquement insaturés polymérisables, dans lequel au moins un est un monomère de diène qui donne une insaturation convenant pour une époxydation, et dans lequel le polymère a été hydrogéné de telle sorte que de 0,1 à 7 méq par gramme de polymère de doubles liaisons aliphatiques restent.

2. Polymère de polydiène suivant la revendication 1, qui a la formule :
(HO)ₓ-A-S_{z}-B-(OH)_{y} ou (HO)ₓ-A-B-S (OH)_{y}
dans laquelle A et B sont des blocs de polymère qui peuvent être des blocs d'homopolymère de monomères dioléfiniques conjugués, des blocs de copolymère de monomères dioléfiniques conjugués ou des blocs de copolymère de monomères dioléfiniques et de monomères hydrocarbonés monoalcényl aromatiques, S est un bloc hydrocarboné vinyl aromatique, x et y sont égaux à 0 ou 1 et chaque x ou y doit être égal à 1, mais seulement un à la fois peut être égal à 1, et z est égal à 0 ou 1.

3. Polymère de polydiène suivant la revendication 2, dans lequel les blocs A ont un poids moléculaire dans la gamme de 100 à 6000 et les blocs B ont un poids moléculaire dans la gamme de 1000 à 15000.

4. Polymère de polydiène suivant l'une ou l'autre des revendications 2 et 3, dans lequel A est de l'isoprène et B est du butadiène.

5. Polymère suivant l'une quelconque des revendications 2 à 4, qui a une structure choisie dans le groupe comprenant I-B-OH, I-S/B-OH, I-EB-OH et I-S/EB-OH, où I est un bloc d'isoprène, B est un bloc de butadiène, EB est un bloc de butadiène hydrogéné, S est un bloc de styrène et OH est un groupe hydroxyle.

6. Polymère de polydiène monohydroxylé époxydé comprenant un polymère de polydiène suivant l'une quelconque des revendications 1 à 5, lequel polymère a été époxydé de telle sorte qu'il contienne de 0,1 à 7,0 méq d'époxy par gramme de polymère.

7. Composition comprenant le polymère suivant la revendication 6 et une résine assurant un collage.

8. Composition comprenant le polymère suivant la revendication 6 et une résine amino compatible.

9. Composition suivant la revendication 8, qui comprend en plus un agent de renforcement.

10. Adhésif comprenant le polymère ou la composition suivant l'une quelconque des revendications 1 à 9.

11. Agent d'étanchéité comprenant le polymère ou la composition suivant l'une quelconque des revendications 1 à 9.
